# EUROPEAN PATENT APPLICATION

(11) **EP 4 253 220 A1**
(43) Date of publication of application: **04.10.2023**
(21) Application number: 22305386.9
(22) Date of filing: 28.03.2022
(51) Int. Cl.: B63B 75/00, B63B 35/00, F03D 80/50, F03D 80/55, F03D 13/25, B63B 27/10, B63B 27/16, B63B 27/30, B66C 13/02, B63B 35/44, E02B 17/00

(54) **OFFSHORE FLOATING INTERVENTION PLATFORM HAVING A LIFTING TOWER WITH A POSITION COMPENSATION DEVICE, RELATED ASSEMBLY AND METHOD**

(71) Applicant: Technip Energies France, 92741 Nanterre Cedex (FR)
(72) Inventor: MOOD, Fredrik, 0250 OSLO (NO); WERENSKIOLD, Nils Erik, 0250 OSLO (NO)
(74) Representative: McWilliams, David John

(57) **Abstract**

The intervention platform (10) comprises at least a wind turbine equipment lifting tower (100), having at least a lifting unit (110A, 110B) comprising :
a mast (112),
a wind turbine equipment elevator (114) configured to vertically move along the mast (112) between a lower loading/unloading position and at least an upper intervention position and
a lifting actuator (116), configured to move the wind turbine equipment elevator (114) between the lower unloading/loading position and the upper intervention position.

The lifting unit (110A, 110B) comprises at least a position compensation device (118) configured to be activated in the loading/unloading position and/or in the intervention position to compensate local vertical displacements between the intervention platform (10) and the wind turbine platform when the intervention platform (10) is docked to the wind turbine platform.

## Description

The present invention concerns an offshore floating intervention platform intended to dock on a floating offshore wind turbine platform to carry out an installation and/or maintenance intervention, the offshore floating intervention platform comprising:
- a floating base, having at least a lower surface intended to be immersed in a body of water;
- at least a wind turbine equipment lifting tower, having at least a lifting unit comprising:
   a mast,
   a wind turbine equipment elevator configured to vertically move along the mast between a lower loading/unloading position and at least an upper intervention position and
   a lifting actuator, configured to move the wind turbine equipment elevator between the lower unloading/loading position and the at least one upper intervention position.

Such an intervention platform is in particular adapted to carry out installation and/or maintenance operations in offshore wind parks located in waters deeper than 60 m.

Installation and maintenance of wind turbines can be carried out using an offshore platform, such as a fixed base platform disclosed in EP 2 275 340. Such a system is particularly adapted for shallow waters.

However, eighty percent of offshore wind resources potential is in waters deeper than 60 m, where conventional bottom technology is not economically feasible or practically possible. To utilize this potential, floater designs are being developed that can facilitate larger turbines with a nominal power greater or equal than 12 MW.

In such locations, the wind turbine mast is carried by a floating base which is anchored by anchoring lines to the bottom of the body of water. An example of floater has a floating base comprising several floating columns connected together by pontoons and/or trusses. The mast may extend from the top of one of the columns.

Floaters which are used to carry wind turbines imply more challenging operating and maintenance (O&M) conditions on the wind turbines that requires new operating and maintenance strategies and technologies.

In particular, the floating wind turbine platform is subjected to offshore conditions including winds, currents, and swell which affects the stability of the equipment carried by the platform.

One aim of the invention is to provide an offshore intervention platform which is particularly adapted to wind farms located in deeper water where installation and maintenance operations are harsh to conduct, in particular due to offshore conditions such as winds, currents, and swell.

To this aim, the subject matter of the invention is an offshore floating intervention platform of the above-mentioned type, characterized in that the at least one lifting unit comprises at least a position compensation device configured to be activated in the loading/unloading position and/or in the at least one intervention position to compensate local vertical displacements between the offshore floating intervention platform and the floating offshore wind turbine platform when the offshore floating intervention platform is docked to the floating offshore wind turbine platform.

The offshore floating intervention platform according to the invention may comprise one or more of the following feature(s), taken solely or according to any technical feasible combination:
- the position compensation device comprises at least a controller of the lifting actuator, configured to control the lifting actuator to generate vertical compensation movements of the equipment elevator in response to local vertical displacements between the offshore floating intervention platform and the floating offshore wind turbine platform;
- the position compensation device comprises at least a sensor configured to provide data representative of a local vertical displacement between the offshore floating intervention platform and the floating offshore wind turbine platform, the controller being configured to receive data representative of the local vertical displacement from the sensor;
- the equipment elevator comprises a boom arm protruding from the mast, and a grab cradle, carried by the boom arm, the grab cradle defining at least a wind turbine equipment housing defining an wind turbine equipment storage axis;
- the boom arm is telescopic, the grab cradle being movable away from the mast by telescopic deployment of the boom arm;
- the grab cradle is configured to translate along the boom arm;
- the grab cradle comprises a transverse displacer, configured to move a wind turbine equipment carried in the housing along the storage axis;
- the grab cradle has a rotation displacer, configured to rotate a wind turbine equipment carried in the housing about the equipment storage axis;
- the lifting unit comprises an additional position compensation device mounted between the boom arm and the grab cradle, the additional position compensation device being configured to be activated in the unloading/loading position or/and in the at least one intervention position to compensate local displacements between the offshore floating intervention platform and the floating offshore wind turbine platform when the offshore floating intervention platform is docked to the floating offshore wind turbine platform;
- the equipment lifting tower comprises at least two lifting units, each comprising a mast, an equipment elevator configured to move vertically along the mast, and a lifting actuator configured to actuate movement of the equipment elevator, the lifting actuators of the two lifting units being independently operable;
- the masts of the lifting units have parallel axis, or at least a mast of one lifting unit has an axis inclined with regard to an axis of a mast of another lifting unit;
- the lifting actuator comprises a rack and pinion mechanism, an hydraulic mechanism, a pneumatic mechanism or a winch mechanism;
- the at least one lifting unit comprises at least a washing unit configured to surround the wind turbine equipment and to move along the wind turbine equipment and/or the at least one lifting unit comprises at least a reinforcing unit configured to surround the wind turbine equipment and to move along the wind turbine equipment to mechanically reinforce the wind turbine equipment;
- the washing unit and/or the reinforcing unit comprises a jaw able to surround the wind turbine element, a connection part to a moving mechanism of the washing unit and/or the reinforcing unit along the wind turbine element and an arm to connect the jaw top the connection part.

The invention also concerns an assembly comprising a floating offshore wind turbine platform, and an offshore floating intervention as defined above, removably docked to the floating offshore wind turbine platform.

The invention also relates to an intervention method comprising :
- docking an offshore floating intervention platform as defined above to a floating offshore wind turbine platform;
- placing the wind turbine equipment elevator in one of the lower unloading/loading position or of the at least one upper intervention position;
- activating the position compensation device in the loading/unloading position or in the at least one intervention position to compensate local vertical displacements between the offshore floating intervention platform and the floating offshore wind turbine platform;
- carrying out an installation and/or maintenance intervention on a wind turbine of the floating offshore wind turbine platform.

The intervention method according to the invention may comprise one or more of the following feature(s), taken solely or according to any technical feasible combination:
- the intervention method comprises moving the elevator between the lower unloading/loading position and the at least one intervention position, the position compensation device being deactivated during the displacement of the elevator between the lower unloading/loading position and the at least one intervention position.

The invention also concerns an offshore floating intervention platform intended to dock on a floating offshore wind turbine platform to carry out an installation and/or maintenance intervention, the offshore floating intervention platform comprising :
- a floating base, having at least a lower surface intended to be immersed in a body of water;
- at least a wind turbine equipment lifting unit, carried by the floating base, having a wind turbine equipment carrier configured to move along a wind turbine equipment,
   characterized in that the at least one lifting unit comprises at least a washing unit configured to surround the wind turbine equipment, the washing unit being connected to wind turbine equipment carrier to move along the wind turbine equipment and/or the at least one lifting unit comprises at least a reinforcing unit configured to surround the wind turbine equipment, the washing unit being connected to wind turbine equipment carrier to move along the wind turbine equipment to mechanically reinforce the wind turbine equipment.

The offshore floating intervention platform may comprise one or more of the above mentioned feature or one or more of the following features:
- the washing unit is associated with a separate spill water collector configured to be positioned at a wind turbine equipment lower free end when wind turbine equipment is positioned vertically;
- the spill water collector is connected to a spill water treatment system.

The invention also relates to an offshore wind turbine platform comprising:
- a floating foundation, having at least a lower surface intended to be immersed in a body of water;
- at least a wind turbine;
- at least a wind turbine equipment lifting unit, carried by the floating base, having a wind turbine equipment carrier configured to move along a wind turbine equipment,
   characterized by at least a washing unit configured to surround the wind turbine equipment, the washing unit being connected to the wind turbine equipment carrier to move along the wind turbine equipment and/or
   characterized by at least a reinforcing unit configured to surround the wind turbine equipment, the washing unit being connected to wind turbine equipment carrier to move along the wind turbine equipment to mechanically reinforce the wind turbine equipment.

The offshore wind turbine platform may comprise one or more of the above mentioned feature or one or more of the following features:
- the washing unit is associated with a separate spill water collector configured to be positioned at a wind turbine equipment lower free end when wind turbine equipment is positioned vertically;
- the spill water collector is connected to a spill water treatment system.

The invention will be better understood, based on reading the following description, given solely as an example, and made in reference to the following drawings in which:
- Figure 1 is a schematic perspective view of a floating offshore wind turbine platform floating on a body of water;
- Figure 2 is a partial perspective view of an offshore floating intervention platform according to the invention, docked to the floating offshore wind turbine platform of figure 1;
- Figure 3 is a schematic horizontal cross section of the floating base of the offshore floating intervention platform and of the floating foundation of the floating offshore wind turbine platform when the two are connected;
- Figure 4 is a side view of the assembly of figure 3, during a first step of removing a wind turbine blade from a wind turbine, in which the elevators of the lifting tower are in an upper intervention position;
- Figure 5 is a view similar to figure 4, in which the elevators of the lifting tower are in a lower unloading/loading position;
- Figure 6 is a schematic perspective view of a lifting tower of an offshore floating intervention platform according to the invention;
- Figure 7 is a side view of a detail of figure 6;
- Figure 8 is a schematic side view of an offshore floating intervention platform equipped with a wind turbine equipment washing unit and/or reinforcement unit;
- Figure 9 is a schematic perspective view of the washing unit;
- Figure 10 is a schematic perspective view of the reinforcement unit.

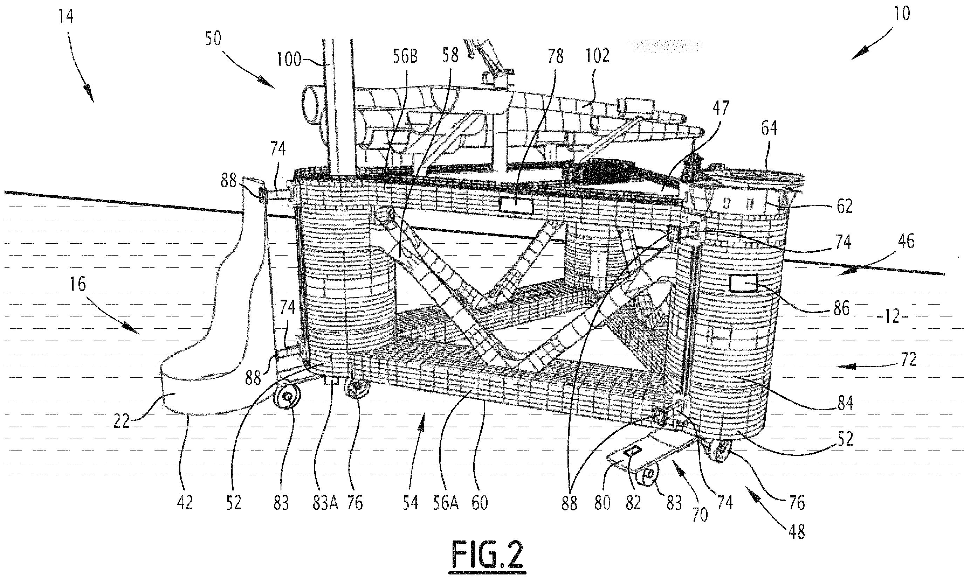

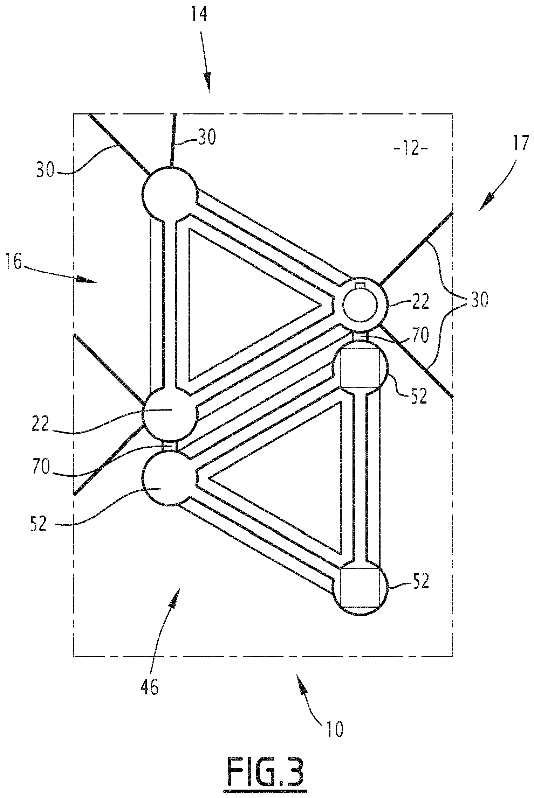

A first offshore floating intervention platform 10 according to the invention is shown in particular in figures 2 to 5.

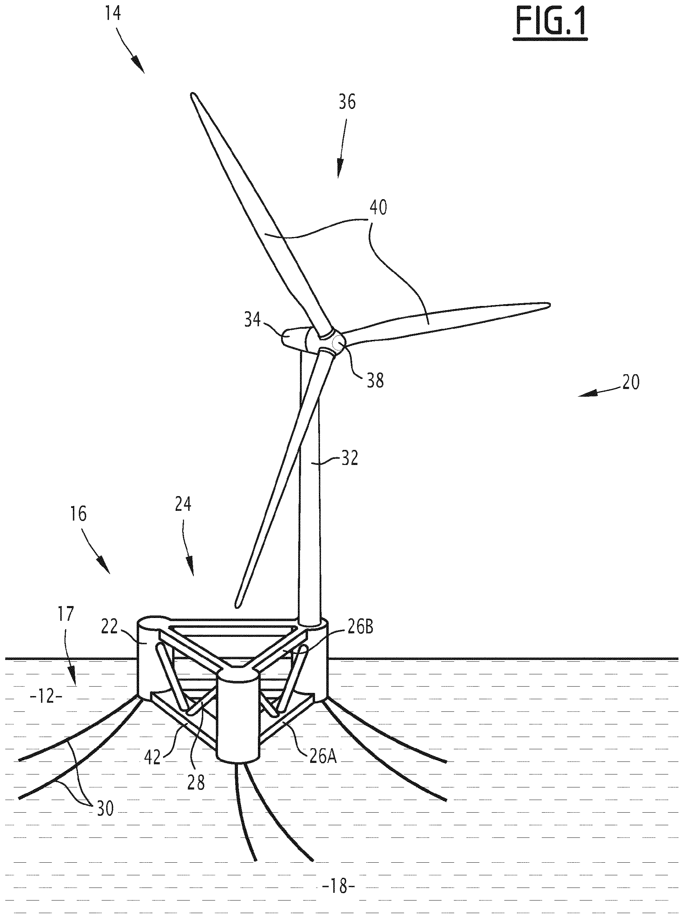

The intervention platform 10 floats on a body of water 12. The intervention platform 10 according to the invention is intended to carry out an installation and/or maintenance intervention on at least one floating offshore wind turbine platform 14 shown in figure 1 and partially in figure 2.

The wind turbine platform 14 is for example located in an offshore wind farm at the surface of the body of water 12.

The body of water 12 in the vicinity of the offshore wind turbine platform 14 has a depth greater than 50 meters, and generally comprised between 60 m and ... m.

The body of water 12 is for example an ocean, a sea, a lake, and/or a river.

In reference to figure 1, the wind turbine platform 14 has a floating foundation 16, an anchoring assembly 17 anchoring the floating foundation 16 to the bottom 18 of the body of water 12 and a wind turbine 20 carried by the floating foundation 16.

In the present example, the floating foundation 16 is a semi-submersible platform. It comprises at least three floating columns 22, frame elements 24 connecting the floating columns 22, and potentially, a deck (not shown).

The frame elements 24 here comprise lower pontoons 26A, connecting each pair of adjacent floating columns 22 at the bottom of the columns 22, upper pontoons 26B connecting each pair of adjacent floating columns 22 at the top of the floating columns 22, and truss members 28, connecting a side of each column 22 to the center of a lower pontoon 26A.

The floating columns 22 extend vertically. The floating columns 22 have a buoyancy volume providing buoyancy to the floating buoyancy to the floating foundation 16. The buoyancy is adapted such that the floating foundation 16 is partially immersed in the body of water 12.

The anchoring assembly 17 comprises a plurality of anchoring lines 30 connecting each column 22 to the bottom 18 of the body of water 12. In the example of figure 1, each floating column 22 is connected to at least an anchoring line 30, preferentially, between two and four anchoring lines 30.

The wind turbine platform 14 is therefore immobilized in horizontal position in the body of water 12.

The wind turbine 20 classically comprises a mast 32, a nacelle 34 mounted rotatable at the top of the mast 32, and a rotor 36, mounted rotatable with regards to the nacelle 34 preferentially about a horizontal axis.

The rotor 36 comprises a central hub 38 and blades 40 protruding radially from the central hub 38, the blades being reversibly fixed on the hub 38.

The mast 32 is here fixed on top of a floating column 22, coaxially with the floating column 22 axis.

The floating columns 22 and advantageously the lower pontoons 26A define a lower surface 42 of the wind turbine platform 14, below which the intervention platform 10 is able to dock.

The floating offshore intervention platform 10 is configured to be moved at the surface of the body of water 12 to come in the vicinity of the wind turbine platform 14. It is configured to dock and be immobilized on the wind turbine platform 14 during an intervention.

Preferably, when the intervention platform 10 is docked to the wind turbine platform 14, the relative motion between the intervention platform 10 and the wind turbine platform 14 at 100 m to 150 m above the surface of water is no more than 1.5m in x, y and z directions for conditions in the body of water with a significant wave height Hs = 2,5 m and a wave period of 8 seconds. The term "significant wave height" denotes the characteristic height of the random waves in a sea state.

The intervention is for example an installation of a wind turbine equipment and/or a maintenance of the wind turbine equipment. In particular, the wind turbine equipment is a blade 40, and the intervention is the installation of a blade 40, a maintenance on a blade 40, or a replacement of a blade 40.

Other interventions concerning the nacelle 34 or the mast 32 are also within the scope of interventions which can be carried out using the intervention platform 10.

In reference to figure 2, the intervention platform 10 has a floating base 46 onto which a deck 47 is mounted. It has a system 48 configured to removably dock on the wind turbine platform 14, and a wind turbine intervention system 50 carried on the deck 47 to be configured to access to wind turbine equipment and carry out the intervention on the wind turbine 20.

The floating base 46 is advantageously similar to the floating foundation 16 of the wind turbine platform 14.

It comprises at least three floating columns 52, frame elements 54 connecting the floating columns 52, and potentially, the deck 47.

The frame elements 54 here comprise lower pontoons 56A, connecting each pair of adjacent floating columns 52 at the bottom of the columns 52, upper pontoons 56B connecting each pair of adjacent floating columns 52 at the top of the floating columns 52. The frame elements 54 further comprise truss members 58, connecting a side of each column 22 to the center of a lower pontoon 26A.

The floating columns 52 extend vertically. The floating columns 52 have a buoyancy volume providing buoyancy to the floating base 46. The buoyancy is adapted such that the floating base 46 is partially immersed in the body of water 12.

The floating columns 52 and/or the lower pontoons 56A define a lower surface 60 of the intervention platform 10 which is totally immersed in the body of water 12.

The deck 47 potentially carries accommodation 62 for the personnel, and a helicopter land pad 64 for transporting personnel to the platform.

According to the invention, the docking system 48 comprises at least a heave plate 70 and a ballasting/de-ballasting unit 72 to control the vertical position of the at least one heave plate 70.

Advantageously, the docking system 48 further comprises at least a contact arm 74 protruding from the floating base 46 towards the wind turbine platform 14, propellers 76, and at least a mooring equipment 78.

The docking system 48 comprises at least one heave plate 70 configured to protrude horizontally from the floating base 46 to be applied under the lower surface 42 of a wind turbine platform 14.

In the example of figure 2, the docking system 48 comprises at least two heave plates 70 configured to protrude from a same side of the floating base 46, in particular configured to protrude from two adjacent floating columns 52 of the floating base 46.

In the example of figure 2, each heave plate 70 is configured to protrude from the lower surface 60, under a floating column 52.

Each heave plate 70 defines an upper contact surface 80 with the lower surface 42 of the wind turbine platform 14.

The area of the upper contact surface 80 is preferably greater than 5%, notably greater than 10% of the area of the lower surface 60 of a floating column 52.

The upper contact surface 80 is advantageously equipped with anchoring equipment 82 such as a friction pad or a suction device, configured to immobilize the upper surface 82 on the lower surface 42 of the wind turbine platform 14.

In a preferred embodiment, each heave plate 70 is deployable between a retracted position located under the lower surface 60, for example under the lower pontoons 56 and/or under the floating columns 52, and a deployed protruding position to apply under the floating foundation 16.

The heave plate 70 is for example rotatable about a vertical axis, or is telescopic. The heave plate 70 is advantageously equipped with an actuator 83 such as a side thruster or water jet system and with a locking system 83A.

The actuator 83 is configured to apply side thrust or water pressure to move the heave plate 70 between the retracted position and the deployed position. It is also configured to provide suction to the suction device of the upper contact surface 80, when present.

The locking system 83A is configured to selectively lock the heave plate 70 in at least the retracted position and the deployed position.

The ballasting/de-ballasting unit 72 comprises at least a ballast receiving volume 84 and ballast controller 86 configured to control the amount of ballast received in the ballast receiving volume 84.

At rest, the ballast receiving volume is filled at least partially with a gas such as air. The ballast receiving volume is for example located within the floating column 52 or/and within the frame elements 54.

The ballast is here formed with water from the body of water 12. The ballast controller 86 comprises at least a pump configured to pump ballast in and/or out of the ballast receiving volume to adjust the amount of ballast 84 received in the ballast receiving volume.

Thus, the ballast controller 86 is configured to control the draft of the floating base 46 between a lower position, in which each heave plate 70 is configured to pass under the lower surface 42 of the wind turbine platform 14 and an immobilizing position, in which the upper surface 80 of the heave plate 70 is applied under the lower surface 42 of the wind turbine platform 14. In the immobilizing position, the upper surface 80 advantageously exerts an upper force on the lower surface 42.

Each contact arm 74 is configured to protrude away from the floating columns 52 to contact and advantageously connect to the floating foundation 16, in particular to a floating column 22 of the floating foundation 16.

Each contact arm 74 has at least a free end 88 equipped with connecting equipment such as a magnetic connecting equipment, a mechanical connecting equipment and/or a suction connecting equipment.

In the example of figure 2, each floating column 52 of the floating base 46 is equipped with at least one contact arm 74 located above the heave plate 70, preferentially with two contact arms 74 located above the heave plate 70.

Advantageously, each contact arm 74 is deployable from the floating column 52 from a retracted configuration to an extended configuration.

In a variant, the contact arms 74 are bumpers with or without a connecting equipment (suction, magnetic, mechanical).

In the example shown in figure 2, each contact arm 74 is also mounted vertically mobile on the floating column 52 to adjust its vertical position between an upper dry position above the surface of water to a lower immersed position below the surface of water.

The propellers 76 are for example thrusters. They are mounted below the lower surface 60, for example at the bottom of a floating column 52. They are preferentially rotatable about a vertical axis under the lower surface 60, for example with an angular range of 360°. The propellers 76 are configured to horizontally displace each floating column 52 and/or the whole floating base 46 on the body of water 12.

Advantageously, the propellers 76 are retractable within the floating base 46, in particular in the floating columns 52.

The mooring equipment 78 comprise at least a mooring line configured to deploy towards the wind turbine platform 14 and at least a mooring winch configured to pull the mooring line to provide a further immobilization of the floating base 46 of the intervention platform 10 on the floating foundation 16 of the wind turbine platform 14.

The intervention platform 10 preferentially comprises a control room/wheelhouse (not shown) with radar, radio communication, navigation controllers including dynamic positioning to control in particular the propellers 74. The control room also includes at least a control unit to monitor and remote control functional systems of the intervention platform 10 such as the docking system 48 and/or the wind turbine intervention system 50.

The intervention platform 10 also comprises a power generation system, advantageously with low or non-emission, to generate electric power and a battery power bank to store electrical power.

The power generation system for example runs on hydrogen, ammonia or low emission fuels as biofuel or Liquid Natural Gas.

Battery power only can also be provided. The batteries are then regularly charged either by connecting to the wind farm power grid at dedicated buoys, substations or when it is connected to the floating offshore wind turbine platform 14 or other power producing sources, typically support or standby vessel.

The batteries of the battery power bank may be sized only for transit between the wind turbine platforms 14 and for connecting to the grid to charge, for example with a maximal autonomy of less than 10 km, for example around 1 km to 2 km.

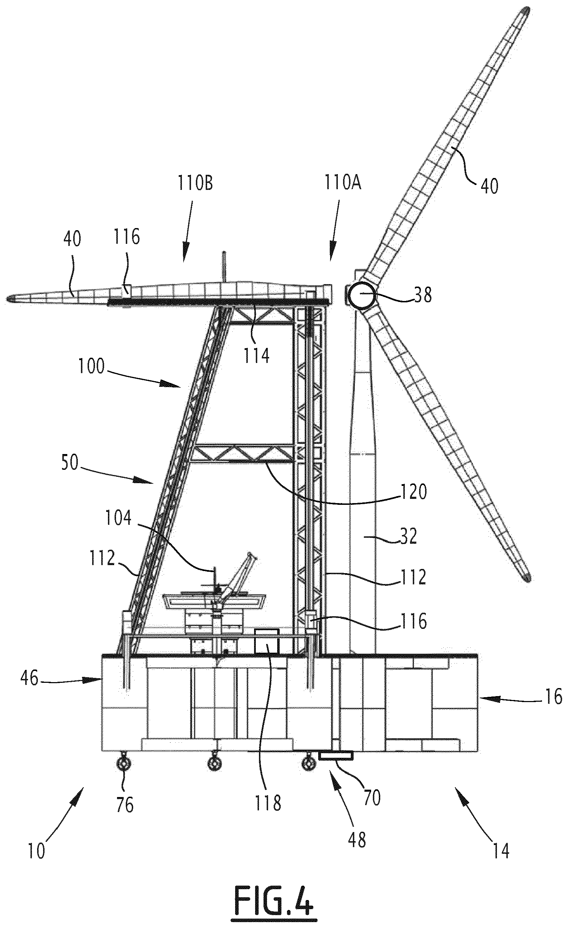

As shown in figures 4 to 7, the wind turbine intervention system 50 comprises a wind turbine equipment lifting tower 100. It advantageously comprises a wind turbine equipment storage 102 (see figure 2) and at least a crane 104 (see figure 4) to transport wind turbine equipment between the wind turbine equipment storage 102 and the wind turbine equipment lifting tower 100.

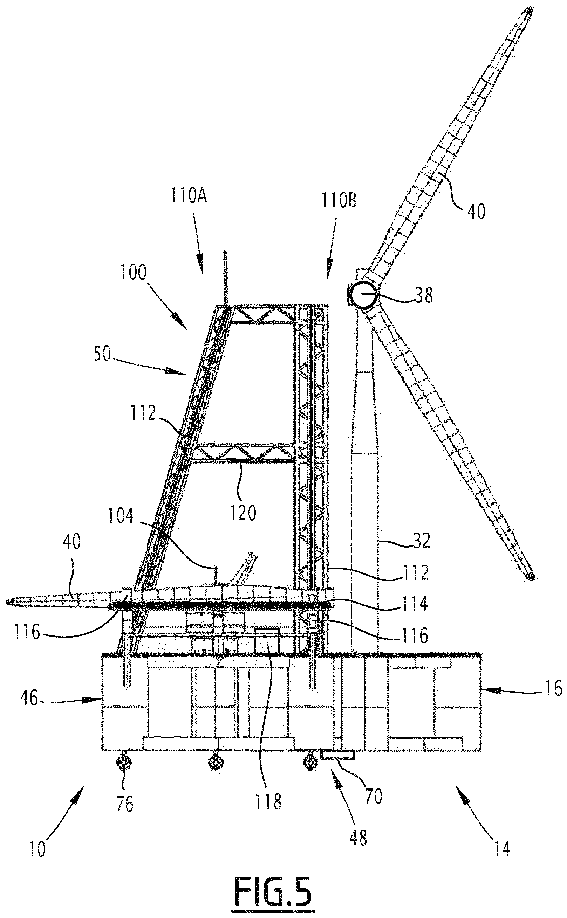

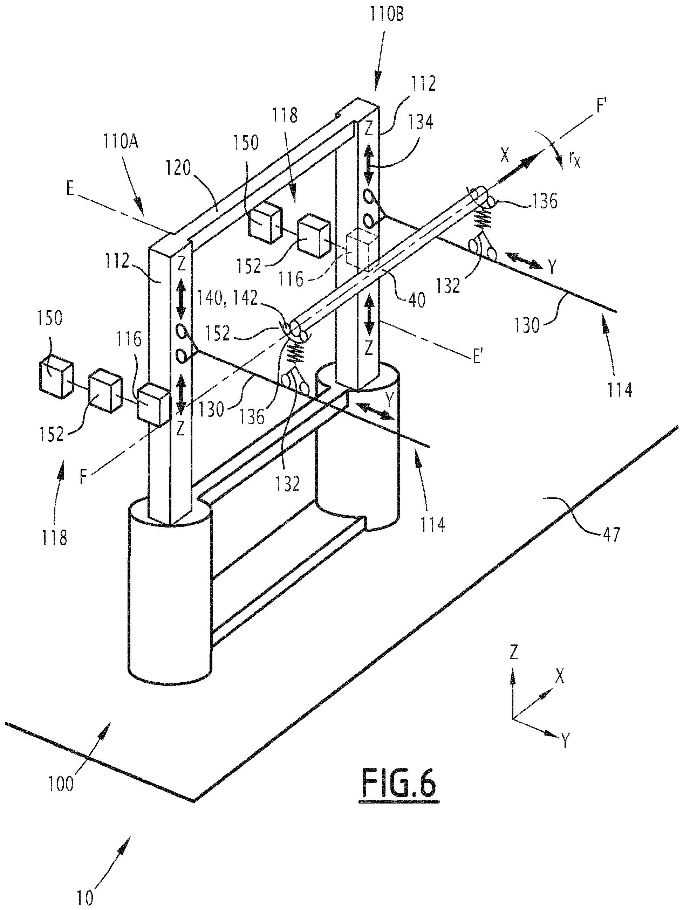

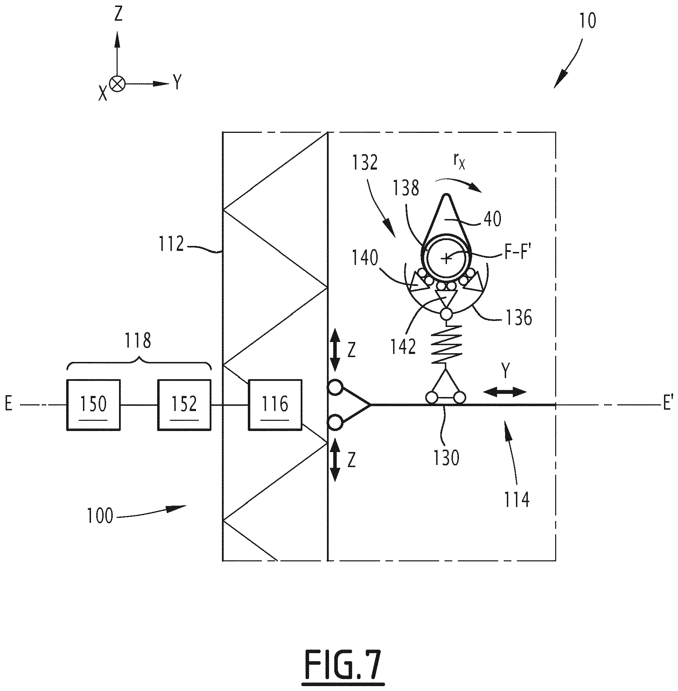

In the examples shown in figures 4 and 5 and in figures 6 and 7, the lifting tower 100 comprises at least one lifting unit 110A, 110B, each lifting unit 110A, 110B having a mast 112, an elevator 114, mounted mobile along the mast 112, and a lifting actuator 116 to move the elevator 114 between a lower unloading/loading position and at least an upper intervention position. The lifting tower 100 comprises at least a truss 120 connecting the mast 112 of one lifting unit 110A to the mast 112 of another lifting unit 110B.

According to the invention, each lifting unit 110A, 110B comprises a position compensation device 118 (see figures 6 and 7) to compensate variations of vertical position between the floating foundation 16 of the wind turbine platform 14 and the floating base 46 of the intervention platform 10, after the intervention platform 10 has docked on the wind turbine platform 14.

Each mast 112 extends upwardly from the deck 47. At least one mast 112 of a lifting unit 110A, 110B extends along a vertical axis.

In the example of figures 4 and 5, at least a mast 112 of a lifting unit 110A extends vertically and at least a mast 112 of another lifting unit 110B extends inclined with regards to a vertical axis. The lifting tower 110 has an A shape. In the example of figures 6 and 7, both masts 112 extend vertically. The lifting tower 110 has an H shape.

In these examples, each mast 112 comprises an open framework. The mast 112 is fixed on the deck 47. In another example, the mast 112 is a deployable mast which deploys telescopically from the deck 47.

As shown in figures 6 and 7, the elevator 114 of each mast 112 comprises a boom arm 130 and a grab cradle 132 carried by the boom arm 130.

In the example of figure 6, the boom arm 130 protrudes horizontally from the mast 112. It is mounted mobile on the mast 112, along the axis of the mast 112, for example through rollers. The boom arm 130 for example follows a guide 134 provided on the mast 112.

In this example, the boom arm 130 has a fixed length from the mast 112. In a variant, not shown, the boom arm 130 is deployable, for example telescopically.

The grab cradle 132 is mounted movable on the boom arm 130 along an axis E-E' perpendicular to the axis of the mast 112. It is for example mounted on rollers guided on the boom arm 130.

In a variant where the boom arm 130 is deployable, the grab cradle 132 is movable away from the mast 112 during the deployment of the boom arm 130.

In the example of figure 7, the grab cradle 132 comprises a C-shape member, which defines, at its center, an open central housing 138 intended to receive the wind turbine equipment. The central housing 138 defines a wind turbine equipment storage axis F-F' which, in this example, extends perpendicular to the boom arm axis E-E'.

The grab cradle 132 further comprises a transverse displacer 140 of the wind turbine equipment and a rotation displacer 142 of the wind turbine equipment.

The transverse displacer 140 for example comprises rollers or tracks configured to displace the wind turbine equipment received in the housing 138 along the wind turbine equipment storage axis F-F'.

The rotation displacer 142 also comprises rollers and/or tracks which can be common to the rollers and/or tracks of the transverse displacer 140.

The rotation displacer 142 is configured to rotate the wind turbine equipment about the wind turbine equipment storage axis F-F' within the housing 138.

Thus, each lifting unit 110A, 110B is configured to independently lift the wind turbine equipment contained in the housing 138 of the grab cradle 132 along a vertical axis, to move it apart from the mast 112 along the boom arm axis E-E' and also to displace it along the storage axis F-F' through the transverse displacer 140. It is further configured to rotate locally the wind turbine equipment contained within the housing 138 about the storage axis F-F'.

Additionally, since the lifting units 110A, 110B are operable independently one from another, the grab cradles 132 are configured to be placed at different horizontal and vertical positions. It is thus possible to tilt the wind turbine equipment contained in each housing 138 with regards to an axis parallel to the boom arm axis E-E', by setting the grab cradles 132 at different heights. It is also possible to tilt the wind turbine equipment contained in each housing 138 with regards to a vertical axis, by placing the grab cradles 132 of the lifting units 110A, 110B at different longitudinal positions away from the mast 112.

It is therefore very easy to adjust the angle of connection of the wind turbine equipment with the wind turbine 20 when installing or replacing a wind turbine equipment.

In an advantageous embodiment, the grab cradle 132 has air cushions to hold the wind turbine equipment in the grab cradle 132. The air cushions prevent damage to the wind turbine equipment and extra adjustment capabilities, movement compensation and damping.

The lifting actuator 116 for example comprises a rack and pinion mechanism, a hydraulic mechanism, a pneumatic mechanism or a winch operated mechanism to pilot the vertical displacement of the boom arm 130, the horizontal displacement of the grab cradle 132 and/or to pilot the transverse displacer 140 or the rotation displacer 142.

The position compensation device 118 comprises at least a sensor 150 configured to determine data representative of a vertical displacement between the floating foundation 16 of the wind turbine platform 14 and the floating base 46 of the intervention platform 10, when the floating base 46 is docked on the floating foundation 16.

The position compensation device 118 further comprises a controller 152 configured to control the lifting actuator 116 to compensate the vertical displacement between the floating foundation 16 and the floating base 46.

The sensor 150 for example comprises an optical sensor, a mechanical sensor, an accelerometer, a GPS. The sensor is located on either or each of the floating foundation 16 and of the floating base 46.

The sensor 150 is configured to provide data representative of the vertical displacement, and in some cases, of other horizontal displacements. Data is available at least at one intervention height, preferably at a plurality of intervention heights.

The controller 152 for example comprises a computer having a processor and a memory comprising software configured to calculate a control order of the lifting actuator 116 in response to data representative of the vertical displacement measured by the sensor 150, by implementing a control loop. In a variant, the computer comprises a field programmable gate array or other dedicated integrated circuitry.

An intervention method on a wind turbine platform 14 using the intervention platform 10 according to the invention will now be described.

Initially, the intervention platform 10 approaches the wind turbine platform 14 using the propellers 76. The approach is controlled by dynamic positioning to position the floating columns 52 of the floating base 46 at a distance from the floating columns 22 of the floating foundation 16, without coming in conflict with the anchoring lines 30 of the anchoring assembly 17.

Then, the contact arms 74 are activated. The contact arms 74 in their upper dry position are lowered down to their lower wet position. If deployable, the contact arms 74 then deploy and contact their free ends 88 to the floating columns 22 of the floating foundation 16. The free ends 88 are connected to floating columns 22 of the floating foundation 16 by means of the connection equipment, when available, so that two floating columns 52 of the floating base 46 are secured respectively to two respective floating columns 22 of the floating foundation 16 by at least two connection points.

In a variant, fewer connection points or connection points at other locations of the floating foundation 16 can be provided.

The mooring equipment 78, the propellers 76 and/or hydraulic arms are then used to pull the floating foundation 16 and the floating base 46 together.

The heave plates 70 below the floating base 46 of the intervention platform 10 are then positioned underneath the lower surface 42 of the floating foundation 16, in particular underneath the floating columns 22.

When the heave plates 70 are deployable, they are deployed to protrude away from the floating base 46 towards and under the floating foundation 16, for example by rotation or telescopic deployment provided by the actuator 83. They are then locked in the deployed position by the locking systems 83A.

If necessary, the draft of the floating base 46 is adjusted by the ballast controller 86 to allow the heave plates 70 to freely position underneath lower surface 42.

When the heave plates 70 are positioned underneath the lower surface 42, in particular underneath the floating columns 22, the ballast controller 86 removes ballast from the floating base 46. This decreases the draft of the floating base 46 to apply the upper surface 80 of the heave plates 70 to the lower surface 42 and exert an upwardly directed force on the lower surface 42.

If present, the anchoring equipment 82 on the upper surface 80 is activated to connect to the lower surface 42 by vacuum/hydrostatic pressure, suction, mechanically, and/or magnetically.

The floating foundation 16 and the floating base 46 as much as possible behave like a single body and aid to reduce any relative motion at nacelle height.

The intervention method then comprises an installation or maintenance operation on the wind turbine 20.

A wind turbine equipment disassembly and replacement will now be described. The wind turbine equipment is for example a blade 40.

Prior to engaging the wind turbine platform 14, the storage 102 of the intervention platform 10 is loaded with wind turbine equipment using the crane 104 from a wind turbine equipment transport vessel or barge

Initially, the elevators 114 of each lifting unit 110A, 110B are elevated in registry with the wind turbine equipment to each reach an installation position. The lifting actuator 116 moves the boom arm 130, the grab cradle 132, the transverse displacer 140 and/or the rotation displacer 142 to place the wind turbine equipment in the housing 138.

When the grab cradle is in the vicinity of the wind turbine equipment, the position compensation device 118 is energized. Sensor 150 detects potential vertical displacements between the floating foundation 16 of the wind turbine platform 14 and the floating base 46 of the intervention platform 10. It provides data representative of the vertical displacement, and in some cases, of other horizontal displacements, to the controller 152.

At each instant, the controller 152 calculates a control order of the lifting actuator 116 in response to the data representative of the vertical displacement measured by the sensor 150 by implementing a control loop and provides the control order to the lifting actuator 116.

The lifting actuator 116 then moves the elevator 114 in response to the control order to compensate the vertical displacement between the floating foundation 16 and the floating base 46.

The grad cradle 132 safely latches onto the wind turbine equipment. When the equipment is a blade 40, blade connection nuts are removed from blade connection bolts.

The grab cradle 132 is then moved along the boom arm 130 to shift the wind turbine equipment clear of the wind turbine 20. The position compensation device 118 is de-energized.

The elevators 114 are then moved down to their unloading / loading position. The wind turbine equipment is then displaced by the crane 104 to an empty space in the storage 102.

A new wind turbine equipment is picked up from the storage 102 and is positioned on the elevators 114. The elevators 114 are elevated in an installation position for example at the nacelle 34. Again, the position compensation device 118 is energized as decribed above.

The grab cradles 132 are then individually positioned to place the wind turbine equipment at the right position and in the right orientation to be assembled on the wind turbine 20.

This adjustment is made easy thanks to the independent operation of each lifting unit 110A, 110B, providing vertical translation of the boom arms 130 along the masts 112, horizontal translation of the grab cradle 132 along the boom arm 130 and additional degrees of liberty in translation and in rotation using the transverse displacer 140 and the rotation displacer 142.

In case the wind turbine equipment is a blade 40, the grab cradles 132 align the blade bolts with the nacelle holes and shifts the new blade into the nacelle 34. Blade connection nuts are installed on the bolts.

Once the wind turbine equipment has been put in place, the grab cradles 132 unlatch from the wind turbine equipment and are lowered clear. The position compensation device 118 is de-energized.

The previous steps can then be repeated for installing or replacing another equipment if needed.

Once the intervention is over, the intervention platform 10 disconnects from the wind turbine platform 14.

In the above example, the anchoring equipment 82 is deactivated, the ballast controller 86 increases the draft of the floating base 46 to detach the heave plates 70 from the lower surface 32. The mooring equipment 78 and the contact arms 74 disconnect from the floating foundation 16.

The propellers 76 are then energized to move the intervention platform 10 away from the wind turbine platform 16 towards a transportation vessel, and/or to dock to another wind turbine platform 16.

The intervention platform 10 according to the invention is hence configured to carry out self-propelled and low-emission operations including installation and maintenance in a wind park in deeper waters having floating wind turbine platforms 16. Its similar motion characteristics as the wind turbine platform 16 allow a safe and simple operation on a wind park to assist inspection and perform maintenance, repair work and blade and turbine (gear, rotor, transformer, etc.) replacements.

When equipped in particular with a position compensation device 118, the lifting tower 100 of the intervention platform 10 allows an adaptable yet precise positioning of a wind turbine equipment to assemble and/or disassemble it form the wind turbine 20 in a safe and easy manner, even if the wind turbine 20 is carried by a floating foundation 16 and not by a fixed base system.

The intervention platform 10 is hence particularly adapted to deeper water interventions.

In a variant, an additional vertical and/or horizontal position compensation device is provided between the boom arm 130 and the grab cradle 132 to further compensate relative displacements between the intervention platform 10 and the wind turbine platform 14 when the intervention platform 10 is docked on the wind turbine platform 14.

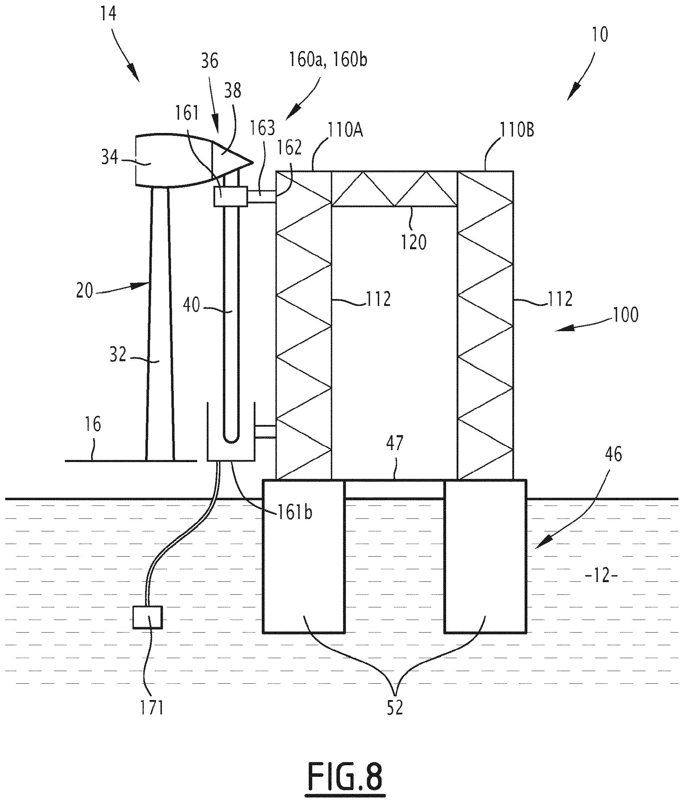

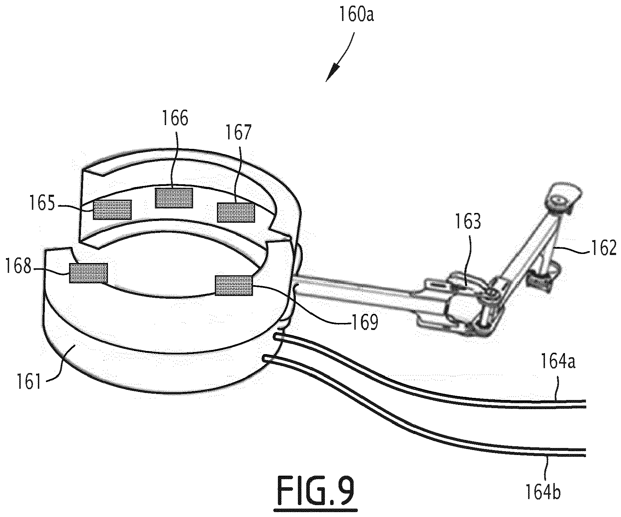

In the example of figures 8 and 9, at least a lifting unit 110A, 110B comprises a mobile washing unit 160a.

The washing unit 160a comprises a robotic arm 163 with one or more links with rotational degree of freedom, one or more arm sections that can elongate in length and with functions to allows it to move up and down.

The washing unit 160a also comprises a connection part 162 that can be mounted mobile on the tower mast 112, for example on the elevator 114 or alternatively be mounted to a mobile crane with long reach arm, that can be positioned on either the floating base 46 or the floating foundation 16.

Another option is that the washing unit 160a is mounted to the wind turbine 20 itself via a system configured to move up and down the wind turbine 20.

The washing unit 160a further comprises a jaw 161 that can encircle a wind turbine equipment such as a blade 40 by an opening and closing mechanism.

In reference to figure 9, within the jaw 161, the washing unit 160a advantageously include water spray and soap nozzles 165, hot air dryers 166, rubber blades or scrubs 167, visualization/inspection tools including light 168, and/or a spill water collector 169. The spill water collector 169, when present, allows a washing of the wind turbine equipment in horizontal position as well as a debris collection (e.g. soap particles, paint etc)

The washing unit 160a also have hoses 164a, 164b respectively for cold and hot fresh water supply and for water and/or debris drainage.

The washing unit 160a is preferably associated with a separate spill water collector 161b positioned at the blade free end when the blade 40 is positioned vertically.

The spill water collector 161b is connected to a spill water treatment system 171 with a filter and treatment unit having filters. Thus, no pollutant is released to the body of water 12 to avoid wild life ingesting small blade particles. The treated water is collected and reused while waste is safely deposed of collected and transported on shore for further treatment.

In a preferred operation of the washing unit 160a, the blade 40 is positioned vertically. The lower free end of the blade 40 is placed in the spill water collector 161b. Then, the jaw 161 is opened and lifted around the blade 40 to insert the blade 40 in the jaw 161. The jaw 161 is then closed and the washing unit 160a is moved along the blade 40.

The water spray and soap nozzles 165, hot air dryers 166, rubber blades or scrubs 167, and/or visualization/inspection tools including light 168 are then activated and move vertically along the blade 40 to wash its external surface.

Spill water sprayed on the blade 40 in the jaw 161 runs down along the blade 40 and reaches the blade free end. It is then collected in the spill water collector 161b and transported to the spill water treatment system 171.

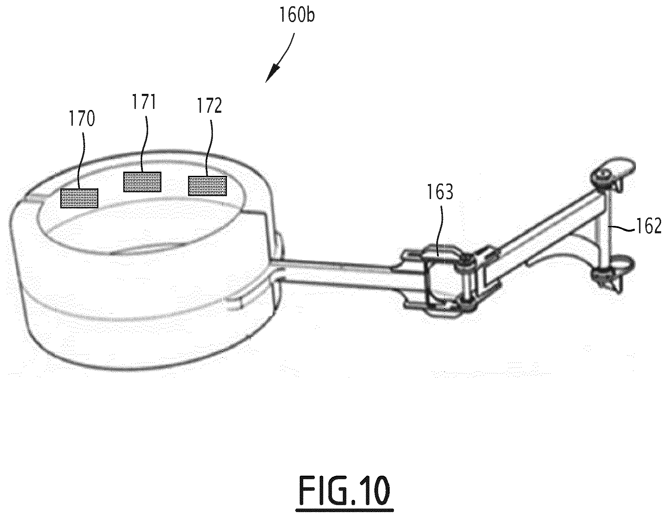

In the example of figure 10, at least a lifting unit 110A, 110B comprises a mobile wind turbine reinforcement unit 160b.

The reinforcement unit 160b is similar in structure to the washing unit 160a, with a jaw 161 mounted on a robotic arm 163, movable along the mast 112 of the lifting unit 110A, 110B or/and the wind turbine 20.

The reinforcement unit 160b is able to treat mechanical damage (such as cracks) to the wind turbine equipment, here a blade 40, to advantageously let the wind turbine equipment self-heal.

The reinforcement unit 160b is configured to apply heat locally (by electricity, friction and/or chemical reaction) to areas with mechanical damage so that the material of the wind turbine equipment (e.g. resin and or coating) can self-heal.

The reinforcement unit 160b comprises at least a heating source 170 within the jaw 161 configured to locally focus and apply heat to a given area. The heating source 170 is configured to raise the temperature of the given area for example to between 80°C and 250°C. The heated material (e.g. resin or coating) is able to plasticity yield to fill and fix mechanical damages such as cracks.

In variant or in complement, the reinforcement unit 160b has a local resin and/or coating dispenser configured to heat and dispense resin and/or coating to fill mechanical damages.

In that case, the reinforcement unit 160b potentially has a vacuum, pressure or vibration applicator 171 to aid the resin or coating to enter into mechanical damages. The jaw 161 is then advantageously equipped with air cushions (not shown) at its edges to be able to define an airtight housing which seals around the blade.

In variant or in complement, the reinforcement unit 160b has at least a tool 172 to drill holes and cut small cuts in the wind turbine equipment.

In a variant, the docking system 48 of the intervention platform 10 does not comprise at least a heave plate 70 configured to protrude laterally from the floating base 46 to dock on the wind turbine platform 16.

## Claims

1. An offshore floating intervention platform (10) intended to dock on a floating offshore wind turbine platform (14) to carry out an installation and/or maintenance intervention, the offshore floating intervention platform (10) comprising :
- a floating base (46), having at least a lower surface (60) intended to be immersed in a body of water (12);
- at least a wind turbine equipment lifting tower (100), having at least a lifting unit (110A, 110B) comprising :
a mast (112),
a wind turbine equipment elevator (114) configured to vertically move along the mast (112) between a lower loading/unloading position and at least an upper intervention position and
a lifting actuator (116), configured to move the wind turbine equipment elevator (114) between the lower unloading/loading position and the at least one upper intervention position;
**characterized in that** the at least one lifting unit (110A, 110B) comprises at least a position compensation device (118) configured to be activated in the loading/unloading position and/or in the at least one intervention position to compensate local vertical displacements between the offshore floating intervention platform (10) and the floating offshore wind turbine platform (14) when the offshore floating intervention platform (10) is docked to the floating offshore wind turbine platform (14).

2. The offshore floating intervention platform (10) according to claim 1, wherein the position compensation device (118) comprises at least a controller (152) of the lifting actuator (116), configured to control the lifting actuator (116) to generate vertical compensation movements of the equipment elevator (114) in response to local vertical displacements between the offshore floating intervention platform (10) and the floating offshore wind turbine platform (14).

3. The offshore floating intervention platform (10) according to claim 2, wherein the position compensation device (118) comprises at least a sensor (150) configured to provide data representative of a local vertical displacement between the offshore floating intervention platform (10) and the floating offshore wind turbine platform (14), the controller (152) being configured to receive data representative of the local vertical displacement from the sensor (150).

4. The offshore floating intervention platform (10) according to any one of the preceding claims, wherein the equipment elevator (114) comprises a boom arm (130) protruding from the mast (112), and a grab cradle (132), carried by the boom arm (130), the grab cradle (132) defining at least a wind turbine equipment housing (138) defining an wind turbine equipment storage axis (F-F').

5. The offshore floating intervention platform (10) according to claim 4, wherein the boom arm (130) is telescopic, the grab cradle (132) being movable away from the mast (112) by telescopic deployment of the boom arm (130).

6. The offshore floating intervention platform (10) according to any one of claims 4 or 5, wherein the grab cradle (132) is configured to translate along the boom arm (130).

7. The offshore floating intervention platform (10) according to any one of claims 4 to 6, wherein the grab cradle (132) comprises a transverse displacer (140), configured to move a wind turbine equipment carried in the housing (138) along the storage axis (F-F').

8. The offshore floating intervention platform (10) according to any one of claims 4 to 7, wherein the grab cradle (132) has a rotation displacer, configured to rotate a wind turbine equipment carried in the housing (138) about the equipment storage axis (F-F').

9. The offshore floating intervention platform (10) according to any one of claims 4 to 8, wherein the lifting unit (110A, 110B) comprises an additional position compensation device mounted between the boom arm (130) and the grab cradle (132), the additional position compensation device being configured to be activated in the unloading/loading position or/and in the at least one intervention position to compensate local displacements between the offshore floating intervention platform (10) and the floating offshore wind turbine platform (14) when the offshore floating intervention platform (10) is docked to the floating offshore wind turbine platform (14).

10. The offshore floating intervention platform (10) according to any one of the preceding claims, wherein the equipment lifting tower (100) comprises at least two lifting units (110A, 110B), each comprising a mast (112), an equipment elevator (114) configured to move vertically along the mast (112), and a lifting actuator (116) configured to actuate movement of the equipment elevator (114), the lifting actuators (116) of the two lifting units (110A, 110B) being independently operable.

11. The offshore floating intervention platform (10) according to claim 10, wherein the masts (112) of the lifting units (110A, 110B) have parallel axis, or at least a mast (112) of one lifting unit (110B) has an axis inclined with regard to an axis of a mast (112) of another lifting unit (110A).

12. The offshore floating intervention platform (10) according to any one of the preceding claims, wherein the lifting actuator (116) comprises a rack and pinion mechanism, an hydraulic mechanism, a pneumatic mechanism or a winch mechanism.

13. The offshore floating intervention platform (10) according to any one of the preceding claims, wherein the at least one lifting unit (110A, 110B) comprises at least a washing unit (160a) configured to surround the wind turbine equipment and to move along the wind turbine equipment and/or the at least one lifting unit (110A, 110B) comprises at least a reinforcing unit (160b) configured to surround the wind turbine equipment and to move along the wind turbine equipment to mechanically reinforce the wind turbine equipment.

14. Assembly comprising a floating offshore wind turbine platform (14), and an offshore floating intervention platform (10) according to any one of the preceding claims, removably docked to the floating offshore wind turbine platform (14).

15. An intervention method comprising :
- docking an offshore floating intervention platform (10) according to any one of claims 1 to 13 to a floating offshore wind turbine platform (14);
- placing the wind turbine equipment elevator (114) in one of the lower unloading/loading position or of the at least one upper intervention position;
- activating the position compensation device (118) in the loading/unloading position or in the at least one intervention position to compensate local vertical displacements between the offshore floating intervention platform (10) and the floating offshore wind turbine platform (14);
- carrying out an installation and/or maintenance intervention on a wind turbine (20) of the floating offshore wind turbine platform (14).

16. The intervention method according to claim 15, comprising moving the elevator (114) between the lower unloading/loading position and the at least one intervention position, the position compensation device (118) being deactivated during the displacement of the elevator (114) between the lower unloading/loading position and the at least one intervention position.
